# EUROPEAN PATENT SPECIFICATION

(11) **EP 2 620 420 B1**
(45) Date of publication and mention of the grant of the patent: **09.03.2016**
(21) Application number: 13164833.9
(22) Date of filing: 03.05.2010
(51) Int. Cl.: C04B 28/04, C04B 111/00, C04B 26/26

(54) **Use of crushed ceramic aggregates coming from baked ceramic reject recovery processes for the preparatiaon of concrete, bituminous conglomerates, cementitious conglomerates**
Verwendung von zerbrochenen Keramikzuschlägen aus Verfahren zur Wiedergewinnung von gebranntem Keramikausschuss zur Herstellung von Beton, Bitumenkonglomeraten, zementartigen Konglomeraten
Utilisation d'agrégats de céramique broyés provenant de processus de récupération de rejet de céramique cuite pour la préparation de béton, conglomérats bitumineux et conglomérats cimentaires

(43) Date of publication of application: 31.07.2013
(62) Divisional of application: 10161719.9
(73) Proprietor: Cattalini, Mariella, 42030 Villa Minozzo (RE) (IT)
(72) Inventor: COTTAFAVA, Massimo, 41049 SASSUOLO (IT)
(74) Representative: Martegani, Franco

(56) References cited:
- JP-A- 2001 303 506
- JP-A- 2004 346 580
- RU-C1- 2 103 242
- AGOSTINACCHIO M ET AL: "The use of marginal materials in road constructions: Proposal of an eco-compatible section", ADVANCED TESTING AND CHARACTERIZATION OF BITUMINOUS MATERIALS,, 1 January 2009 (2009-01-01), pages 1131-1142, XP009169962,
- BININCI H: "Effect of crushed and basaltic pumice as fine aggregates on concrete mortars properties", CONSTRUCTION AND BUILDING MATERIALS, ELSEVIER LNKD- DOI:10.1016/J.CONBUILDMAT.2006.06.002, vol. 21, no. 6, 1 January 2007 (2007-01-01), pages 1191-1197, XP002550017, ISSN: 0950-0618 [retrieved on 2006-08-17]
- SENTHAMARAI R M ET AL: "Concrete with ceramic waste aggregates", CEMENT & CONCRETE COMPOSITES,, vol. 27, no. 9-10, 1 October 2005 (2005-10-01), pages 910-913, XP002550018,
- PASETTO: "The re-utilisation of discarded building materials in cement-stabilised layers of road and airfield pavements", WASTE MANAGEMENT SERIES,, vol. 1, 1 January 2000 (2000-01-01), pages 548-566, XP009169927,

## Description

The present invention relates to the use of crushed ceramic aggregates coming from baked ceramic reject recovery process for the preparation of bituminous conglomerates, cementitious conglomerates, concrete and conglomerate derivatives having different formulations.

Inert aggregates are a component of base materials used for the production of concrete, bituminous conglomerate, cementitious conglomerates suitable for civil engineering works. Inert products are also used for producing reliefs, sub-bases, infills, foundations, in addition to environmental restoration works.

The increasing consumption on a world scale of inert products and the growing attention of society towards environmental problems make the traditional removal of these from natural quarries and river beds increasingly more difficult and inconvenient from an economic point of view.

In recent years, this situation has induced operators in the field to look for alternative supply sources of these raw materials, such as for example debris from constructions and the demolition of building products, waste from smelting processes, asphalt coming from milling scarifications, etc. The recycling of these waste products, in fact, allows economic and environmental benefits to be obtained, firstly thanks to the reduction in the production of waste destined for disposal and secondly the considerable saving of tradition quarry material.

In order to be able to effectively re-used in the above technological fields, the recycled inert products must has specific technical characteristics, generally defined by sector regulations (national and international). These regulations specify requisites, such as the dimension, form and hardness of the aggregates, for use as inert materials. In conformance with the sector regulations, producers of inert materials must therefore guarantee adequate cleanliness levels of the materials, i.e. no contamination by undesired substances, homogeneity of the composition and particle-size, specific water absorption capacities. For this purpose, the recycling processes of recovered materials comprise mechanical grinding, sieving treatment and elimination of the impurities.

In spite of the growing recycling activity of inert products of various kinds and origin, the quantity of recycled materials available on the whole is far from satisfying the field demands and the necessity is therefore strongly felt for finding further supply sources of materials of this type.

In the field of the preparation of cementitious and bituminous conglomerates, the use of recovered inert aggregates also has specific problems. With respect to traditional inert quarry products, recovered inert materials can have particular chemical, physical and mechanical characteristics which make the formulation of the conglomerate mixtures quite complex. Account must be taken for example of the chemical compatibility of the amalgam of recovered inert materials with bituminous or hydraulic binders and/or the relative physico-mechanical characteristics, which must enable the end-product to provide adequate performances. The problem of preparing formulations capable of satisfying the requisites required by the standards of the sector is particularly felt in the case of the preparation of bituminous conglomerates for the production of street paving, especially for the production of surface wear pavements, where the bituminous conglomerates must have particular characteristics of stability, adherence, resistance to wear and atmospheric agents.

The use of marginal materials in road constructions is disclosed for example in Agostinacchio et al. "The use of marginal materials in road constructions; proposal of an eco-compatible section"; Advanced Testing and Characterization of bituminous materials, 01.01.2009, pages 1131-1142. Further, Pasetto in "The re-utilization of discarded building materials in cement-stabilised layers of road and airfields pavements", Waste Management Series; vol.1, 01.01.2000; pages 548- 566, discloses the use of crushed materials form demolition.

An objective of the present invention is to overcome the drawbacks indicated by the state of the art.

An object of the present invention therefore relates to the use of crushed ceramic aggregates coming from baked ceramic reject recovery processes for the preparation of cementitious conglomerates and concrete according to claim 1.

The crushed ceramic aggregates which can be used for the purposes of the present invention are obtained through crushing, grinding and sieving operations of baked ceramic rejects of various origins.

Baked ceramic rejects refer to residues of ceramic products, of any form and dimension, such as tiles, stoneware, etc., which have generally reached the end of their functional cycle.

Considering their origin, geometrical form and dimensions, ceramic rejects are extremely heterogeneous. Ceramic rejects are generally in the form of flat fragments, i.e. fragments in which one of the dimensions (thickness) is much lower than the other two (height and width). Through grinding operations in specific form-correcting mills, the dimensions of the aggregates are made homogeneous, i.e. the starting ceramic rejects are reduced to crushed ceramic aggregates having dimensions lower than 40 mm.

Considering the advantages, in particular environmental, that the object of the present invention obtains, the Applicant has decided to identify the future commercial product with the name "ECOCER".

Processes for the preparation of crushed ceramic aggregates also comprise cleaning and washing treatment for the removal of the various kinds of impurities originally existing (for example, metallic, plastic parts, polystyrene, packaging, etc.).

The crushing, grinding, sieving, cleaning and washing operations can be effected according to the techniques and with the equipment known to experts in the field.

The cementitious conglomerates comprising crushed ceramic aggregates as above disclosed can be used for the production of concrete end-products for various types of application and, in particular, for the production of road foundations.

It is disclosed also a cementitious conglomerate comprising:
a) a mixture of crushed ceramic aggregates coming from recovery processes of baked ceramic rejects;
b) cement in a quantity varying from 4 to 6% by weight with respect to the weight of the mixture of crushed ceramic aggregates;
c) water in a quantity varying from 7 to 9% by weight with respect to the weight of the mixture of crushed ceramic aggregates.

The cement is preferably present in the cementitious conglomerate in a quantity equal to 5% by weight with respect to the weight of the mixture of crushed ceramic aggregates. The cement is preferably a cement of type II, even more preferably a cement of type II/A-M 32.5R.

The water is preferably present in the cementitious conglomerate in a quantity equal to 8% by weight with respect to the weight of the mixture of crushed ceramic aggregates.

According to the present invention, the crushed ceramic aggregates, used for the preparation of a cementitious conglomerate, consist of a single granulometric fraction classified as G_{A}85 according to the regulation UNI EN 12620.

The mixture of crushed ceramic aggregates composed of the above single granulometric fraction is also indicated hereafter as base mixture.

The physico-mechanical characteristics of the base mixture make this mixture classifiable as belonging to group A1ₐ- according to the regulation CNR-UNI 10006/63.

Other characteristics of the base mixture are the following:
- the volumic mass of the aggregates (measured according to UNI EN 1097-6) is about 2.38 Mg/m³,
- the content of fine products (measured according to the regulation UNI EN 9331) is equal to about 5.6% by weight with respect to the weight of the base mixture,
- the fragmentation resistance index according to the Los Angeles test (UNI EN 1097-2) is equal to 25,
- the water absorption (UNI EN 1097-6) is equal to about 2.09% by weight with respect to the weight of the base mixture.

The above base mixture is also characterized by release levels of washing substances (leaching test IRSA CNR 1994) below the limits admitted by national and international regulations, in particular with respect to the limits established by the Ministerial Decree of February 5^{th} 1998 (annex 3).

Thanks to these physico-chemical characteristics, the crushed ceramic aggregates of the base mixture are particularly suitable for the preparation of cementitious and bituminous conglomerates with a low environmental impact. Furthermore, the mechanical properties of the end-products produced with the disclosed cementitious conglomerate are characterized by performances analogous to those of the end-products constructed with conventional cementitious conglomerates.

The crushed ceramic aggregates used according to the present invention are also suitable for the preparation of bituminous conglomerates for the construction of street paving.

It is also disclosed a bituminous conglomerate for the production of street paving comprising:
a) a mixture of inert materials comprising crushed ceramic aggregates coming from recovery process of baked ceramic rejects;
b) road tar;
c) a tar regenerating adhesion activating agent.

The mixture of inert materials also comprises recycled asphalt (so-called milled product).

In the disclosed bituminous conglomerates, the crushed ceramic aggregates can form the whole of the inert aggregates or they can be a component of the mixture of inert materials, being mixed with conventional aggregates coming from quarries or river beds. The quantity of crushed ceramic aggregates in the bituminous conglomerate varies from 0.1% to 100% by weight with respect to the weight of the overall inert materials present.

In particular, the crushed ceramic aggregates are suitable for forming the aggregates present in the mixture of inert materials in the case of bituminous conglomerates to be used for the construction of surface wear pavements for street paving, preferably together with a recycled asphalt component (milled product).

The selection of the specific granulometric fractions of the crushed ceramic aggregates is of fundamental importance for obtaining an optimum granulometric curve for the production of a surface wear pavement.

Some specific granulometric fractions of the crushed ceramic aggregates used according to the present invention are, on the other hand, suitable for the production of bituminous conglomerates for the production of connection layers and base layers of street paving.

When the crushed ceramic aggregates, used according to the present invention, are used in a mixture with conventional aggregates (aggregates from quarries or coming from river beds), the conventional aggregates are present in a variable quantity of up to 99.9% by weight with respect to the weight of the overall inert materials present.

In the disclosed bituminous conglomerates, the road tar is preferably present in a quantity varying from 3 to 9% by weight with respect to the weight of overall inert materials present. The road tar can also be modified road tar.

Considering the particular smoothness (glazed) of at least one side of the material which forms the crushed baked ceramic aggregate and the oxidation of the tar present in the recycled asphalt mixture, in order to obtain a good binding action on the part of the tar, the presence in the conglomerate of a regenerating adhesion activating compound of tar is necessary, in a quantity varying from 0.4 to 0.5% by weight with respect to the weight of the tar.

In order to increase the roughness and adherence of the wear surfaces produced with mixtures of disclosed bitminous conglomerate, the formulation of the mixture preerably comprises recycled asphalt (also called milled asphalt).

Recycled or milled asphalt is a bituminous conglomerate deriving from scarification operations of road pavements with the use of specific milling machines.

The recycled or milled asphalt is present in the disclosed bituminous conglomerate in a quantity ranging from 5 to 35%, more preferably from 5 to 12.5% by weight with respect to the weight of the overall inert materials present for conglomerates suitable for the construction of surface wear pavements, preferably from 5 to 35% by weight with respect to the weight of overall inert materials present for conglomerates for the construction of connection and base layers.

The fillers and regenerating adhesion activating agents of the tar which can be used for the purposes of the present invention are those normally adopted in the field of the preparation of bituminous conglomerates. The filler is preferably present in the mixture of inert materials in a quantity varying from 3 to 10% by weight with respect to the weight of overall inert materials present.

A bituminous conglomerate suitable for the production of surface wear pavements for street paving comprises:
the following aggregates I-IV (weight percentages referring to the total weight of components I-IV), as component a):
   I) 50-60% of crushed ceramic aggregates having dimensions of less than 4 mm;
   II) 30-40% % of crushed ceramic aggregates having dimensions varying from 4 to 8 mm;
   III) 5-12.5% of recycled asphalt;
   IV) 5%-8% by weight of filler
      in a mixture with
   V) 6.5%-8% by weight of road tar referring to the total weight of components I)-IV), as component b);
   VI) 0.4-0.5% by weight of regenerating adhesion activating agent of the tar referring to the weight of component V), preferably 0.4% by weight, as component c).

The crushed ceramic aggregates coming from recovery processes of baked ceramic rejects are used for the preparation of a bituminous conglomerate suitable for the construction of connection layers (also called binders) and base layers (also called toutvenants). In these conglomerates, a part of the natural quarry aggregates is substituted with selected fractions of crushed ceramic aggregates. In particular, the following granulometric fractions are used:
- granulometric fraction having dimensions of less than 4 mm (sand),
- granulometric fraction having dimensions varying from 4 to 8 mm (4/8 granulate) and
- granulometric fraction having dimensions varying from 8 to 12 mm (8/12 granulate).

The bituminous conglomerate suitable for the production of connection layers and base layers preferably comprises:
the following aggregates I-IV (weight percentages referring to the total weight of components I-IV), as component a):
   I) 10-45% of crushed ceramic aggregates comprising granulometric fractions i) having dimensions of less than 4 mm, ii) having dimensions varying from 4 to 8 mm and iii) having dimensions varying from 8 to 12 mm;
   II) 30-35% of recycled asphalt;
   III) 10-60% of quarry aggregates;
   IV) 3%-8% of filler
      in a mixture with
   V) 3.5%-5% by weight of road tar referring to the total weight of components I)-IV), as component b) ;
   VI) 0.4-0.5% by weight of regenerating adhesion activating agent of the tar referring to the weight of component V), preferably 0.4% by weight, as component c).

The disclosed bituminous conglomerates have high mechanical characteristics and stability (Marshall), also under conditions of prolonged wear.

Of fundamental importance for obtaining high-quality bituminous conglomerates is the specific selection of the granulometric fractions of the crushed ceramic aggregates.

The cementitious and bituminous conglomerates obtained with the use of inert materials comprising the crushed ceramic aggregates of the present invention also have high performance characteristics, comparable to those of conventional materials and at a much lower cost. The presence of ceramic aggregates in the bituminous conglomerates used for the production of surface wear pavements also offers the additional advantage of improving the road visibility in the case of darkness or fog. As the recovered ceramic rejects also comprise glazed ceramics, in fact, the crushed ceramic aggregates used as inert materials in the upper layers of the wear surface can reflect the light coming from the light beams of the car headlights, thus contributing to improving the driving visibility conditions of car drivers.

The following embodiment example is provided for purely illustrative purposes of the present invention and should not be considered as limiting the protection scope defined in the enclosed claims.

### EXAMPLE 1

A cementitious conglomerate was prepared starting from a mixture of fragmented ceramic aggregates containing a single granulometric fraction classified as GA85 according to the regulation UNI EN 12620 (base mixture).

The mixture has the following characteristics:
- belonging to group A1-a according to the regulation CNR-UNI 10006/63),
- the volumic mass of aggregates (measured according to UNI EN 1097-6 was equal to 2.38 Mg/m³,
- the content of fine products (measured according to the regulation UNI EN 9331) was equal to 5.6% by weight of the base mixture,
- the fragmentation resistance index according to the Los Angeles test (UNI EN 1097-2) was equal to 25,
- the water absorption (UNI EN 1097-6) was equal to 2.09% by weight of the base mixture,
- leaching test values (IRSA CNR 1994) proved to be below the limits envisaged by annex 3 of the Ministerial Decree of February 5, 1998.

The granulometric analysis of the mixture gave the following results:

| Sieve opening (mm) | Total pass-through (mass %) |
|---|---|
| 25 | 100 |
| 15 | 97.3 |
| 10 | 90.6 |
| 5 | 69.4 |
| 2 | 43.3 |
| 0.4 | 12.7 |
| 0.180 | 7.7 |
| 0.075 | 5.4 |

The aggregates were mixed with a quantity of cement of type II/A-M 32.5R equal to 5% and with water in a quantity equal to 8% (weight percentages referring to the weight of the total inert materials present).

The conglomerate was subjected to the compression test at 7 days (UNI EN 12390-3). The maximum unitary resistance measured was equal to 4.82 MPa (average of the values obtained on 3 samples).
The conglomerate was subject to the indirect tensile "Brazilian" test at 7 days (UNI EN 12390-6). The maximum unitary resistance measured was equal to 0.42 MPa (average of the values obtained on 3 samples).

## Claims

1. Use of crushed ceramic aggregates coming from recovery processes of baked ceramic rejects for the preparation of cementitious conglomerates and concrete, wherein the crushed ceramic aggregates consist of a single granulometric fraction classified as G_{A}85 according to the regulation UNI EN 12620, said single granulometric fraction being indicated as base mixture, being classifiable as belonging to group A1ₐ- according to the regulation CNR-UNI 10006/63 and having the following further characteristics:
- the volumic mass of the aggregates, measured according to UNI EN 1097-6, is 2.38 Mg/m³,
- the content of fine products, measured according to the regulation UNI EN 933-1, is equal to 5.6% by weight with respect to the weight of the base mixture,
- the fragmentation resistance index according to the Los Angeles test, UNI EN 1097-2, is equal to 25,
- the water absorption, measured according to UNI EN 1097-6, is equal to 2.09% by weight with respect to the weight of the base mixture.

2. Use according to claim 1 for the production of concrete end-products for the production of road foundations.

## Patentansprüche

1. Verwendung von zerbrochenen Keramikzuschlägen, die aus Rückgewinnungsprozessen von gebranntem Keramikausschuss stammen, für die Vorbereitung zementartiger Konglomerate und Beton, wobei die zerbrochenen Keramikzuschläge aus einer einzelnen Kornfraktion bestehen, die als G_{A}85 gemäß der Verordnung UNI EN 12620 klassifiziert ist, wobei der einzelne Kornanteil als Basismischung angegeben ist, die - gemäß der Verordnung CNR-UNI 10006/63 - der Gruppe Alₐ zugehörig klassifizierbar ist und die folgenden weiteren Charakteristiken aufweist:
- die Volumenmasse der Zuschläge, die gemäß UNI EN 1097-6 gemessen ist, beträgt 2,38 Mg/m³,
- der Gehalt von Feinprodukten, der gemäß der Verordnung UNI EN 933-1 gemessen ist, ist gleich 5,6 Gewichts-% in Bezug auf das Gewicht der Basismischung,
- der Index des Widerstandes gegen Zertrümmerung gemäß dem Los-Angeles-Test, UNI EN 1097-2, ist gleich 25,
- die Wasserabsorption, die gemäß UNI EN 1097-6 gemessen ist, ist gleich 2,09 Gewichts-% in Bezug auf das Gewicht der Basismischung.

2. Verwendung nach Anspruch 1 für die Erzeugung von Betonendprodukten für die Erzeugung von Straßenunterbau.

## Revendications

1. Utilisation d'agrégats céramiques broyés provenant de processus de récupération de rejets de céramique cuite pour la préparation de conglomérats cimentaires et de béton, où les agrégats céramiques broyés sont constitués d'une fraction granulométrique unique classifiée comme G_{A}85 conformément à la réglementation UNI EN 12620, ladite fraction granulométrique unique étant indiquée comme mélange de base, pouvant être classifiée comme appartenant au groupe Alₐ- conformément à la réglementation CNR-UNI 10006/63 et présentant les caractéristiques supplémentaires suivantes :
- la masse volumique des agrégats, mesurée conformément à UNI EN 1097-6, est de 2,38 Mg/m³,
- la teneur en produits fins, mesurée conformément à la réglementation UNI EN 933-1, est égale à 5,6 % en poids par rapport au poids du mélange de base,
- l'indice de résistance à la fragmentation conformément à l'essai Los Angeles, UNI EN 1097-2, est égal à 25,
- l'absorption d'eau, mesurée conformément à UNI EN 1097-6, est égale à 2,09 % en poids par rapport au poids du mélange de base,

2. Utilisation selon la revendication 1, en vue de la production de produits finis en béton pour la production de fondations de chaussées.
